# EUROPEAN PATENT APPLICATION

(11) **EP 2 360 650 A1**
(43) Date of publication of application: **24.08.2011**
(21) Application number: 11165970.2
(22) Date of filing: 16.08.2002
(51) Int. Cl.: G07F 7/00, G07F 19/00, H04M 15/00, H04M 17/00

(54) **Method of crediting an account**

(30) Priority: 22.08.2001 GB 0120412
(62) Divisional of application: 02255734.2
(71) Applicant: Turriff International Limited, Road Town, Tortola (VG)
(72) Inventor: Moore, Tony, Tortola (VG)
(74) Representative: Piotrowicz, Pawel Jan Andrzej

(57) **Abstract**

A user can credit their pre-pay account using a two-stage process. In a request stage, the user sends a request using SMS from a first mobile handset (1a) to a secure host (15) indicating that they wish to credit an account associated with the first handset (1a) and also an account linked to a second handset (1a, 1b). The secure host 15 informs a billing centre (12) of the identities of the handsets (1a, 1b) and the amounts to be credited to their respective accounts. The billing centre (12) confirms that the accounts exist. Consequently, the secure host (15) sends a response to the handset (1a). In a payment stage, the user approaches a point of interaction device (POID) (13), transmits a copy of the response over a wireless connection, such as an infrared link and makes a payment. The POID (13) sends a message to the secure host (15) regarding the response and the payment. The secure host (15) validates the request, contacting a bank if necessary to authenticate credit card details, informs the billing centre (12) which updates the accounts, responds to the secure host (15) then sends a confirmation to the POID (13).

## Description

The present invention relates to method of crediting an account and has particular but not exclusive application to pre-paid mobile telephone accounts.

A mobile telecommunications system, which is also known as a cellular telephone network, can be used to provide a plurality of services to a subscriber using a mobile telephone handset, such as making and receiving voice calls, providing and retrieving voicemail and sending and receiving text messages. An example of such a system is one conforming to the Global System for Mobile Communications (GSM) recommendations.

The user can pay for these services generally in one of two ways. They can be charged according to use and billed at regular intervals by a service provider. Alternatively, the user can pre-pay for these services by depositing funds in an account associated with the handset. As and when a service is used, credit is deducted from the account. Provided there is sufficient credit in the account, then the service can be continued to be used. Nevertheless, a point usually comes when the account becomes depleted, in which case further funds are needed. The process of purchasing credit for the account is commonly known as "buying air-time".

Pre-payment can be achieved in several ways.

In one method, the user purchases a "top-up card" of fixed monetary value. The user then credits an account associated with their handset to the value of the card by registering the purchase with a service provider. To register the purchase, the user simply calls the service provider using the mobile telephone handset and keys in an identification number displayed on the card. Alternatively, the user calls the service provider from any fixed or mobile telephone and notifies the service provider of the number of the mobile telephone handset and the identification number.

Although the use of top-up cards is widespread, it suffers several drawbacks. It relies on the user being able to purchase a card of the appropriate type from a retailer. However, access to a retailer can be limited, particularly if the user is travelling abroad. Furthermore, the use of top-up cards is expensive since the cards are used only once and then discarded. The use of cards also requires a high level of security as they are deemed to be cash by criminal elements.

In another method, the user is provided with a swipe-card having a magnetic strip. The magnetic strip carries information relating to the handset. The user visits an agent representing the service provider and hands the swipe-card over to the agent together with payment. The agent then swipes the card through a reader and keys-in the monetary value to be credited to the account. The swipe-card is returned to the user once the process is completed. In this way, information regarding the handset and the credit can be transferred directly to the service provider. Thus, no further action is required on the part of the user.

In yet another method which is described in WO-A-0111857, a user can credit their account through a self-service vending machine. The user enters information into the vending machine, such as the identity of their service provider, the number of their handset, the amount to be credited and pays using cash or credit card. However, this type of vending machine is expensive to install and subject to vandalism. There is also the problem that cash is held in the machine and that the cash must be collected.

All of the above methods allow payment using cash, credit card or debit card.

WO-A-0111857 also describes a method of crediting an account using the mobile telephone handset only. However, the handset requires modification. Payment can only be made using credit and/or debit cards and details must be sent to the service provider. Thus, the handset requires encryption facilities for securely transferring credit and debit card details to the service provider.

The present invention seeks to provide an improved method of crediting an account.

According to a first aspect of the present invention there is provided a method of operating a mobile communications device comprising transmitting, to a host, a request to credit one or more accounts, said request including information identifying said one or more accounts and indicating a respective amount to be credited to each of said one or more accounts, receiving, from said host, a response including a transaction certificate and a message authentication code, storing the response and transmitting, to a payment device, a message comprising information contained in said response.

The transmitting of said request may include transmitting information relating to said mobile communications device. The transmitting of said request may include indicating the identities of said one or more mobile communications devices. The indicating of said identities of said one or more mobile communications devices may comprise transmitting MSISDNs corresponding to said one or more mobile communications devices. The transmitting of said request may include indicating a respective amount to be credited to each of said one or more accounts and/or indicating a period of time for completing a payment process. The transmitting of said request may include sending data through one or more networks, and/or through a public land mobile network and/or through a 2^{nd} generation mobile telephone network, and/or through a 3^{rd} generation mobile telephone network and/or through a packet switched public data network and/or through a public switched telephone network. The transmitting of said request may comprise sending a text message. The transmitting of said message may comprise sending a copy of said response. The transmitting of said message may comprise sending signals over a wireless link. The sending signals over said wireless link may comprise transmitting said signals using infrared radiation or transmitting said signals using radio and, optionally, transmitting signals using a Bluetooth™ transceiver.

According to a second aspect of the present invention there is provided a method of operating a host comprising receiving, from a mobile communications device, a request to credit one or more accounts, said request including information identifying said one or more accounts and indicating a respective amount to be credited to each of said one or more accounts, transmitting a response, to said mobile communications device, the response including a transaction certificate and a message authentication code and receiving, from a payment device, a message including information contained in said response.

The method may further comprise checking said information included in the request. The method may further comprise forwarding, to a billing centre for managing some or all of said one or more accounts, some or all of said information included in said request. The forwarding of said information may comprise sending data through a leased line. The method may further comprise receiving, from said billing centre, an acceptance message. The method may further comprise preparing said response. The transmitting of said response may include indicating a response code for specifying a successful request and/or indicating a reference number for allowing a billing centre to identify said request and/or indicating a sequence number for allowing said host to identify said request for crediting said accounts and/or indicating an expiry date for completing a payment process and/or indicating an amount to be paid and/or indicating a number identifying said mobile communications device and/or indicating a currency code for identifying payment currency and/or indicating a country code for identifying a country in which the mobile communications device has a home network and/or sending a transaction certificate for validating said request at a payment stage and/or sending an authentication code for determining whether said response has been corrupted or tampered with. The method may further comprise storing some or all of said information comprised in said response. The method may further comprise validating said information relating to said response and/or comparing a transaction certificate included in said second message with a transaction certificate computed from data stored at said host. The method may further comprise transmitting a third message, from said host to a bank, for requesting authentication of payment card details and, optionally, at said bank, authenticating said payment card details and, optionally, sending a fourth message, from said bank to said host, for indicating authentication of said payment card details. The method may further comprise transmitting, from said host to said billing centre, a fifth message for notifying said billing centre that the request has been validated and payment received and, optionally, transmitting, from said billing centre to said host, a sixth message for acknowledging said notification. The method may further comprise transmitting, from said host to said payment device, a seventh message confirming that the request has been validated and the payment received. The method may further comprise transmitting, from said host to said mobile communications device, an eighth message confirming that the request has been validated and the payment received. The transmitting of said eighth message may comprise sending a text message.

According to a third aspect of the present invention there is provided a method of operating a payment device comprising receiving, from a mobile communications device, a message comprising information contained in a response to a request by said mobile communications device to credit one or more accounts, the message including a transaction certificate and a message authentication code, and sending a second message to a host including some or all of said information comprised in said message together with information relating to a payment for crediting said one or more accounts. The transmitting of said second message may comprise sending data over one or more networks and/or sending data over a leased line and/or sending data over a public switched telephone network.

According to a fourth aspect of the present invention there is provided a computer program which, when executed by a processor, causes the processor to perform the method.

According to a fifth aspect of the present invention there is provided a method of crediting an account, the method comprising the method of operating host and the method of operating a payment device. The method of crediting an account may further comprise the method of operating a mobile communications device.

According to a fifth aspect of the present invention there is provided a mobile communications device comprising means for transmitting, to a host, a request for crediting one or more accounts, said request including information identifying said one or more accounts and indicating a respective amount to be credited to each of said one or more accounts, means for receiving, from said host, a response including a transaction certificate and a message authentication code, means for storing the response; and means for transmitting, to a payment device, information contained in said response.

According to a sixth aspect of the present invention there is provided a host for managing crediting of account, comprising means for receiving, from a mobile communications device, a request to credit one or more accounts, said request including information identifying said one or more accounts and indicating a respective amount to be credited to each of said one or more accounts, means for transmitting, to said mobile communications device, a response including an amount to be paid in a payment stage, a transaction certificate and a message authentication code; and means for receiving, from a payment device, a message including information contained in said response. The host may comprise means for storing data relating to crediting requests and/or means for providing secure cryptographic facilities and/or means for processing and/or means for checking information included in said request and/or means for preparing said response and/or means for validating said information included in said message.

According to a seventh aspect of the present invention there is provided a payment device comprising means for receiving from a mobile communications device a message comprising information contained in a response to a request by said mobile communications device to credit one or more accounts, the message including transaction certificate and a message authentication code; and means for sending a second message to a host including some or all of said information comprised in said message together with information relating to a payment for crediting said one or more accounts. The receiving means may comprise a wireless transceiver. The wireless transceiver may include an infrared detector and/or includes a Bluetooth™ transceiver. The payment device may be portable of fixed.

According to a eighth aspect of the present invention there is provided a method of crediting an account comprising transmitting, from a mobile communications device to a host, a request for crediting one or more accounts associated with one or more mobile communications devices, said request including information relating to said one or more mobile communications devices, transmitting, from said host to said mobile communications device, a response, transmitting, from said mobile communications device to a payment device, a first message comprising information relating to said response and transmitting, from said payment device to said host, a second message including some or all of said information relating to said response and information relating to a payment, so as to cause crediting of said one or more accounts.

The method may further comprise checking, at said host, said information relating to one or more mobile communications devices included in the request.

The transmitting of said request may include transmitting information relating to said mobile communications device. The transmitting of said request may include indicating the identities of said one or more mobile communications devices, such as transmitting MSISDNs corresponding to said one or more mobile communications devices, and may also include indicating a respective amount to be credited to each of said one or more accounts. The transmitting of said request may further include indicating a period of time for completing a payment process.

The transmitting of said request may include sending data through one or more networks, such as a public land mobile network, a 2^{nd} generation mobile telephone network, a 3^{rd} generation mobile telephone network, a packet switched public data network or a public switched telephone network. The transmitting of said request may comprise sending a text message.

The method may further comprise forwarding, from said host to a billing centre for managing some or all of said one or more accounts, some or all of said information included in said request or information relating to some or all of said one or more mobile communications devices. The forwarding of said information may comprise sending data through a leased line.

The method may further comprise, at said billing centre, checking said forwarded information and transmitting, to said host, an acceptance message or rejection message.

The method may further comprise at said host preparing said response.

The transmitting of said response may include indicating a response code for specifying a successful request, a reference number for allowing a billing centre to identify said request, a sequence number for allowing said host to identify said request for crediting said accounts, an expiry date for completing a payment process, an amount to be paid, a number identifying said mobile communications device, a currency code for identifying payment currency or a country code for identifying a country in which the mobile communications device has a home network. The method may further include sending a transaction certificate for validating said request at a payment stage or an authentication code for determining whether said response has been corrupted or tampered with.

The method may further comprise storing, at said host, some or all of said information comprised in said response and storing said response at said mobile telecommunications device.

The transmitting of said first message may comprise sending a copy of said response. The transmitting of said first message may comprise sending signals over a wireless link, such as transmitting said signals using infrared radiation or radio, for example using a Bluetooth™ transceiver.

The transmitting of said second message may comprise sending data over one or more networks and may include sending data over a leased line or over a public switched telephone network.

The method may comprise, at said host, validating said information relating to said response, for example by comparing a transaction certificate included in said second message with a transaction certificate computed from data stored at said host.

The method may further comprise transmitting a third message, from said host to a bank, for requesting authentication of payment card details and, at said bank, authenticating said payment card details, then sending a fourth message, from said bank to said host, for indicating authentication of said payment card details.

The method may further comprise transmitting, from said host to said billing centre, a fifth message for notifying said billing centre that the request has been validated and payment received and transmitting, from said billing centre to said host, a sixth message for acknowledging said notification.

The method may further comprise transmitting, from said host to said payment device, a seventh message confirming that the request has been validated and the payment received and transmitting, from said host to said mobile communications device, an eighth message confirming that the request has been validated and the payment received. The transmitting of said eighth message may comprises sending a text message.

According to a ninth aspect of the present invention there is provided a method of operating a host comprising receiving from a mobile communications device a request for crediting one or more accounts associated with one or more mobile communications devices, said request including information relating to one or more mobile communications devices, transmitting, to said mobile communications device, a response and receiving, from a payment device, a first message including information relating to said response and a payment made to said payment device.

The method may further comprise checking said information included in said request.

The receiving of said request may include receiving information relating to said mobile telecommunications device or receiving identities of said one or more mobile communication devices, for example receiving MSISDNs corresponding to said one or more mobile communication devices. The receiving of said request may include receiving information relating to a respective amount to be credited to each of said one or more accounts. The receiving of said request may include receiving information relating to a period of time for completing a payment process.

The method may further comprise forwarding, to a billing centre for managing some or all of said one or more accounts, some or all of said information included in said request or forwarding, to a billing centre for managing some or all of said one or more accounts, information relating to some or all of said one or more mobile communications devices.

The method may further comprise at said host preparing said response.

The transmitting of said response may include indicating a response code for specifying a successful request, a reference number for allowing a billing centre to identify said request, a sequence number for allowing said host to identify said request for crediting said accounts, an expiry date for completing a payment process, an amount to be paid, a number identifying said mobile communications device, a currency code for identifying payment currency or a country code for identifying a country in which the mobile communications device has a home network. The method may further include sending a transaction certificate for validating said request at a payment stage or an authentication code for determining whether said response has been corrupted or tampered with.

The method may further comprise storing some or all of said information comprised in said response.

The method may comprise validating said information included in said first message, for example by comparing information included in said first message with information stored at said host. The validating of said information may comprise comparing a first transaction certificate included in said first message with a second transaction certificate computed from data stored at said host.

The method may comprise transmitting to a bank a second message for requesting authentication of a payment card and receiving from said bank a third message for indicating authentication of said payment card.

The method may further comprise transmitting to a billing centre a fourth message for notifying said billing centre that the request has been validated and that payment has been received and receiving a fifth message acknowledging said notification.

The method may further comprise transmitting a sixth message to said payment device for confirming validation of said request and transmitting a seventh message to said mobile communications device for confirming validation of said request, which may comprises sending a text message.

According to a tenth aspect of the present invention there is provided a method of crediting an account comprising providing a host for receiving, from a mobile communications device, a request for crediting one or more accounts associated with one or more mobile communications devices, said request including information relating to said one or more mobile communications devices, for transmitting a response to said mobile communications device and for receiving, from a payment device, information relating to said response and a payment made to said payment device so as to credit said accounts.

The method may further comprise providing at least one payment device for transmitting therefrom information relating to said response and said payment.

According to a eleventh aspect of the present invention there is provided a method of operating a payment device comprising receiving from a mobile telephone device a first message comprising information relating to a response to a request by said mobile telephone device for crediting one or more accounts associated with one or more mobile telephone devices and sending a second message to a host including some or all of said information comprised in said first message together with information relating to a payment for crediting said one or more accounts.

According to a twelfth aspect of the present invention there is provided apparatus for crediting an account comprising means for transmitting, from a mobile communications device to a host, a request for crediting one or more accounts associated with one or more mobile communications devices, said request including information relating to said one or more mobile communications devices, means for transmitting, from said host to said mobile communications device, a response, means for transmitting, from said mobile communications device to a payment device, information relating to said response and means for transmitting information relating to said response and a payment from said payment device to said host so as to credit said accounts.

According to a thirteenth aspect of the present invention there is provided a host for managing crediting of accounts comprising means for receiving, from a mobile communications device, a request for crediting one or more accounts associated with one or more mobile communications devices, said request including information relating to said one or more mobile communications devices, means for transmitting, to said mobile communications device, a response and means for receiving, from a payment device, a first message including information relating to said response and a payment made to said payment device.

The host may comprise means for storing for storing data relating to crediting requests, means for providing secure cryptographic facilities, processor means and means for checking information included in said request.

The host may comprise means for preparing said response, means for validating said information included in said first message, means for transmitting a second message to a bank for requesting authentication of payment card details, means for receiving a third message from said bank for indicating authentication of said payment card details, means for transmitting a fourth message to a billing centre for notifying said billing centre that the request has been validated, means for receiving a fifth message from said billing centre for acknowledging said notification, means for transmitting a sixth message to the payment device for confirming that the request has been validated and means for transmitting a seventh message to the mobile communications device for confirming that the request has been validated.

According to a fourteenth aspect of the present invention there is provided a payment device comprising means for receiving from a mobile telephone device a first message comprising information relating to a response to a request by said mobile telephone device for crediting one or more accounts associated with one or more mobile telephone devices and means for sending a second message to a host including some or all of said information comprised in said first message together with information relating to a payment for crediting said one or more accounts.

The receiving means may comprise a wireless transceiver, such as an infrared transceiver or a Bluetooth™ transceiver.

The payment device may be portable or fixed.

Embodiments of the present invention will now be described, by way of example, with reference to the accompanying drawings in which:
Figure 1 is a schematic diagram of a mobile telecommunications network;
Figure 2 is a schematic illustration of a mobile telephone handset;
Figure 3 is schematic diagram of a billing centre;
Figure 4 is a schematic diagram of a point or interaction device;
Figure 5 is a schematic diagram of a secure host;
Figure 6 shows a process of requesting crediting of an account;
Figure 7 shows information flow between a handset, a secure host and a billing centre;
Figure 8 is a schematic diagram of a request for crediting an account sent from a handset to a secure host;
Figure 9 is a schematic diagram of a message sent from a secure host to a handset;
Figure 10 (2 sheets) shows a process of validating the request of Figure 8;
Figure 11 shows information flow between a handset, point of interaction device, secure host, billing centre and bank; and
Figure 12 is a schematic diagram of a message sent from a point of interaction device to a secure host.

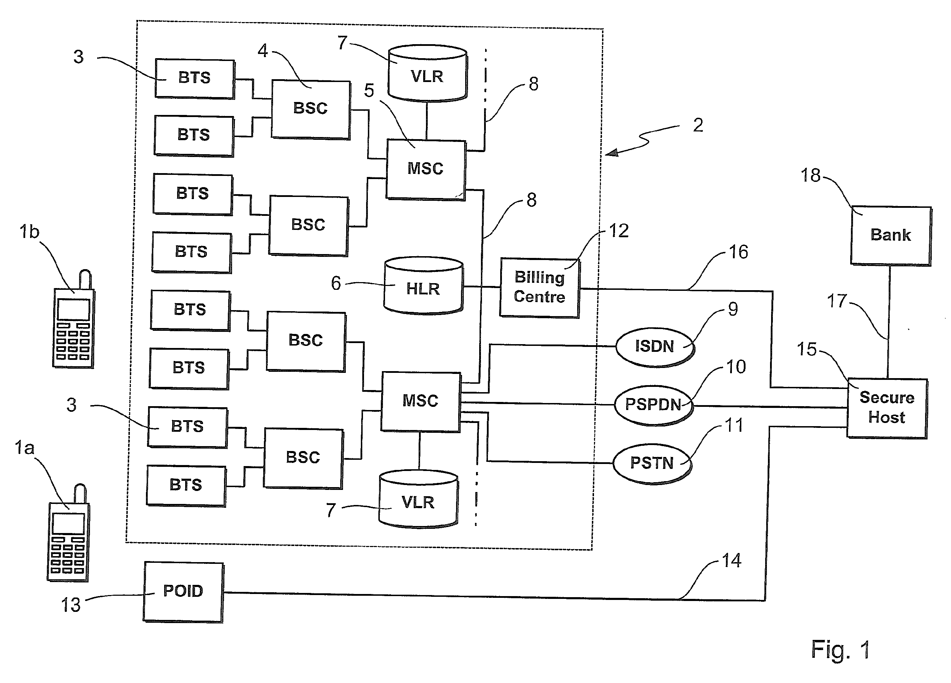

Referring to Figure 1, first and second mobile telephone handsets 1a, 1b are provided with voice and data services through a public land mobile network (PLMN) 2. The PLMN 2 includes a plurality of base transceiver stations (BTS) 3 for exchanging radio signals with the handsets 1a, 1b and a plurality of base station controllers (BSC) 4 for controlling groups of one or more BTSs 3. The PLMN 2 also includes a plurality of mobile switching centres (MSC) 5 for setting-up calls to and from a set of BSCs 4. The MSCs 5 are provided with a home location register (HLR) 6 which is a database for storing subscriber authentication data. Each MSC 5 is also provided with a visitor location register (VLR) 7 which is a database for storing subscriber authentication data of handsets 1a, 1b visiting an area served by the MSC 5.

Each MSC 5 is connected to other MSCs 5 via a network link 8. At least one MSC 5 is connected to other networks including an integrated service data network (ISDN) 9, a packet switched public data network (PSPDN) 10 and a public switched telephone network (PSTN) 11.

The PLMN 2 further includes a billing centre 12 for administering charging and billing. When a user subscribes to use the PLMN 2, their handset 1 is allocated with an international mobile subscriber identity (IMSI) and a mobile station integrated services digital network number (MSISDN). The IMSI and MSIDSN are stored in the HLR 6. The HLR 6 and the billing centre 12 determine whether the handsets 1a, 1b are entitled to use the PLMN 2.

Further information regarding GSM can be found in "The GSM System for Mobile Communications" by Michel Mouly and Marie-Bernadette Pautet, Cell & Sys. (1992).

The users of the handsets 1a, 1b have elected to pre-pay for services rather than be billed at regular intervals. Thus, the first and second handsets 1a, 1b are allocated first and second pre-pay accounts respectively.

To allow the users to credit their accounts, a plurality of point of interaction devices (POIDs) 13 are provided. The POIDs 13 can be fixed or portable and may be located inside or outside an area served by the PLMN 2. The users access the POIDs 13 to make payments as part of a process for crediting their accounts. The POIDs 13 and the crediting process will be described in more detail hereinafter.

The POIDs 13 are permanently or temporarily connected by a first leased line 14 to a secure host 15 for supervising crediting of pre-pay accounts. The secure host 15 is connected by a second leased line 16 to the billing centre 12. The secure host 15 is also connected via a third leased line 17 to a bank 18 for authorising credit and debit card payments.

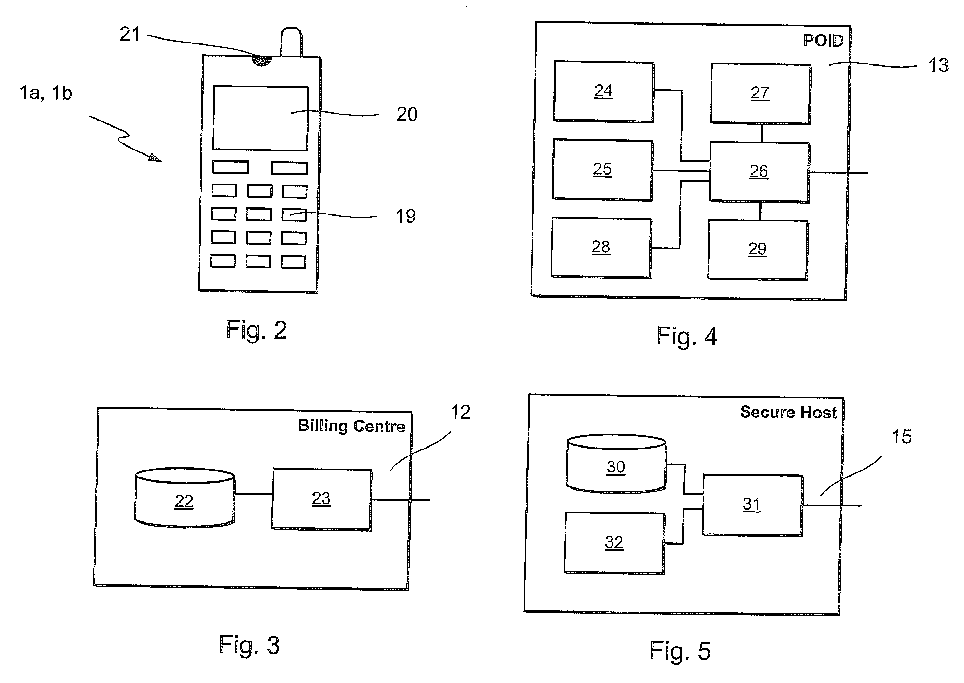

Referring to Figure 2, the mobile telephone handsets 1a, 1b include a keypad 19 for entering information, such as telephone numbers, a liquid crystal display (LCD) 20 for displaying information and a wireless communications transceiver 21 for exchanging information with other devices, including POIDs 13. In this example, the transceiver 21 comprises a light-emitting diode (LED) and a photodiode detector for sending and receiving signals respectively using infrared radiation. Each of the handsets 1a, 1b also includes a processor (not shown) for controlling the keypad 19, LCD 20 and transceiver 21, random access memory (not shown) for storing information and a subscriber identity module (SIM) card (not shown) for storing the IMSI and MSISDN of the handset 1a, 1b and an address book of telephone numbers which comprises a list of MSISDNs. It will be appreciated that other wireless communications transceivers 21 can be used such a Bluetooth™ transceiver. It will also be appreciated that the handsets 1a, 1b also include telephony circuits.

Referring to Figure 3, the billing centre 12 includes a subscriber database 22 storing pre-pay account details and a powerful personal computer 23. The personal computer 23 is used to deduct credit from the appropriate account whenever a call is made from a handset 1a, 1b and to credit the appropriate account whenever prepayment occurs. It will be appreciated that the billing centre 12 may include a mainframe or a plurality of computers to manage pre-pay accounts.

Referring to Figure 4, the POIDs 13 each comprise a card reader 24 for reading information stored on a credit card, debit card or electronic money card, one or more wireless communications transceivers 25 for exchanging information with other devices including the handsets 1a, 1b, a microprocessor 26 and a display 27. The card reader 24 comprises a swipe-card reader for reading information stored on magnetic strips provided on credit and debit cards. Alternatively or additionally, the card reader 24 may comprise a smart card interface for exchanging information with a chip embedded into credit and debit cards. In this example, the one or more wireless communications transceivers 25 comprise an infrared transceiver comprising a light-emitting diode (LED) and a photodiode detector and a wireless transceiver comprising a Bluetooth™ transceiver chip. Optionally, the POID 13 can be provided with a cash receiver 28 for receiving cash payments using notes and/or coins. The POID 13 can also include a non-volatile memory 29 for storing data arising from off-line transactions. The POID 13 is provided with software, firmware or hardware for encrypting data for transmission to the secure host.

POIDs 13 can take many forms. For example, POIDs 13 can be single-function, used solely for the purpose of crediting pre-pay accounts, for example public kiosks or retail terminals. POIDs 13 can be multi-function and may be incorporated into other devices, such as public or private fixed telephones, cash dispensers, cash registers or Point of Sale (POS) devices. Furthermore, POIDs 13 can be fixed or portable.

Referring to Figure 5, the secure host 15 includes a database 30 for storing data relating to crediting requests and transactions, a powerful personal computer 31 and a host security module (HSM) 32 for providing secure cryptographic facilities for message authentication and transaction certificates. The HSM 32 may also be known as a Security Account Manager (SAM). The HSM 32 may be based on Data Encryption Standard (DES), Rivest, Shamir and Adleman (RSA) or other cryptographic systems. The secure host may be located at the premises of a bank, a trusted third party, the PLMN 2 operator or a service provider.

A process by which one or more accounts can be credited will now be described.

Briefly, the crediting process comprises two stages: a request stage and a payment stage:
In the request stage, the first handset 1a sends a request to the secure host 15 to credit the first and/or the second account. The secure host 15 passes on details of the request to the billing centre 12. If the billing centre 12 confirms that the or each account exists, then the secure host 15 sends a response back to the first handset 1a including information necessary for validating the request.
In the payment stage, the user approaches one of the POIDs 13 and transfers the validating information over a wireless link. This can be a point-to-point link, different from the wireless link used in telephony. The user is then prompted to make a payment. When payment is received, the POID 13 transmits the validating information together with information relating to the payment to the secure host 15. The secure host 15 checks the validating information and, if appropriate, performs card authorisation. If the request is valid and the payment is authorised, then the secure host 15 contacts the billing centre 12 to instruct crediting of the account.

Thus, the secure host 15 manages the request and validation and receives the payment. The secure host 15 settles with the billing centre 12 at a later stage.

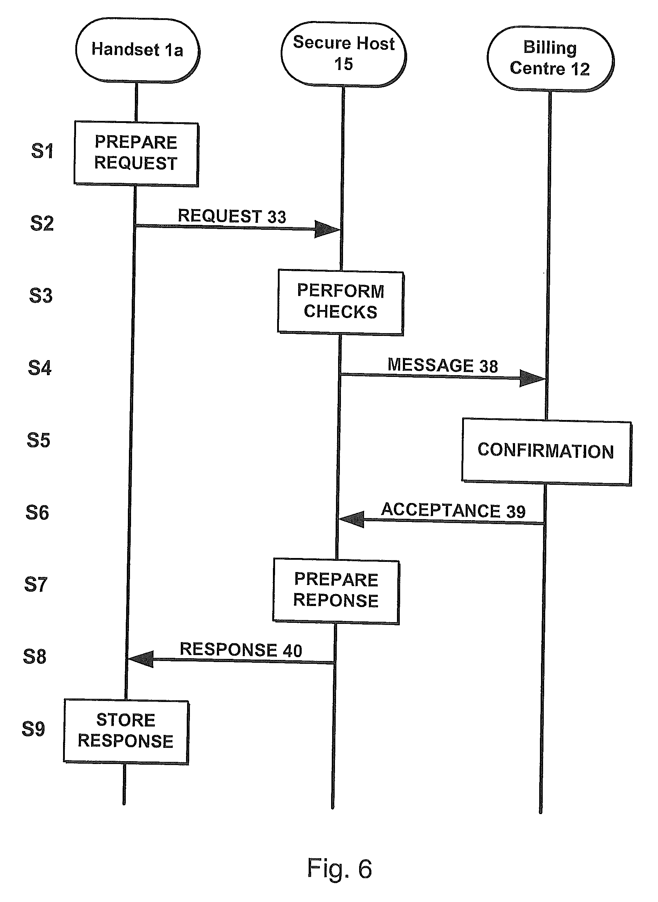

Referring to Figures 6, 7 and 8, the first user prepares a request 33 by selecting a prepayment menu on the display 20 and by entering details regarding the identity of the handsets whose accounts are to be credited and the corresponding amounts (step S1). The controller (not shown) automatically selects the MSISDN 34a of the first handset 1a, in this case +44 777 11 22 33, and prompts the user to choose an amount of credit 35a. In this example, the user selects "*£*20" from a menu. The first user then selects the MSISDN 34b of the second handset 1b from the list of MSISDNs stored on the SIM card, e.g. +44 777 44 55 66, and keys-in "*£*10" of credit 35b. It will be appreciated that the user need not credit another handset's account. It will also be appreciated that the first user can add credit to additional accounts by entering further MSISDNs 34c and further values of credit 35c. It will also be appreciated that the first user need not credit the first account, i.e. their own account. The first user can set a flag 36 asking that an SMS acknowledgement be sent once the crediting process has been completed. Furthermore, the first user can set a first time period 37, for example one or two days, for completing the validation stage. The first user then enters the network number of the secure host 15, for example +44 207 77 88 99, and sends the request 33 to the secure host 15 as a short message service (SMS) text message (step S2). It will be appreciated that the PLMN operator may provide a charge-free network number. However, the request 33 can be sent using other resources, particularly if the handset is WAP-enabled or is a 3^{rd} generation telephone handset.

The request 33 is transmitted through the PLMN 2 and PSPDN 10 to the secure host 15, where it is checked to see to which PLMN the first and second handsets 1a, 1b belong and that a sensible value of credit has been chosen (step S3). If the secure host 15 is satisfied with the request, it forwards an advice message 38 to the billing centre 12 of the PLMN 2, including data relating to the first and second MSISDNs and the first expiry period 37, together with the corresponding values of credit and a reference number (step S4). It will be appreciated that separate messages 38 may be sent to different billing centres of different networks, if the first and second handsets 1a, 1b have different home PLMNs. If the secure host 15 is not satisfied with the request 33, then it sends an error message (not shown) to the first handset 1a and terminates the request process. If this happens, the secure host 15 may bar the first handset 1a from making further requests.

At the billing centre 12, the computer 23 checks whether the first and second MSISDNs exist and are active and whether the first time period 37 is acceptable (step S5). If the first and second MSISDNs are valid, then the billing centre 12 sends an acceptance message 39 to the secure host 15 including a second time period within which validation should be completed (step S6). The second time period can be one imposed by the billing centre 12 or the first time period 37 specified by the first user. If, on the other hand, there is a problem with either of the MSISDNs or any other information comprised in the advice message 38, the billing centre 12 may send a rejection message (not shown) rejecting all or part of the request 33. For example, the request in respect of the first handset 1a may be accepted, while the request regarding the second handset 1b may be rejected. Under these circumstances, either respective acceptance and rejection messages may be sent or a combined message may be transmitted to the secure host 15.

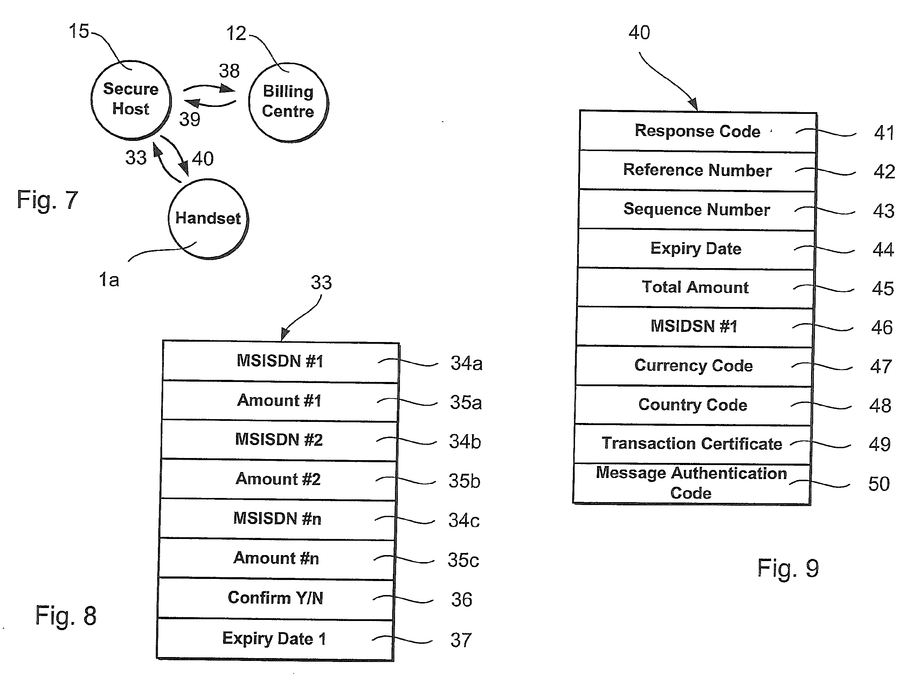

Referring to Figure 9, the secure host 15 prepares a response 40 for sending to the first handset 1a (step S7). The response 40 comprises a response code 41 which informs the handset 1a whether the request was successful, a reference number 42 which identifies the request to the secure host 15, a sequence number 43 which identifies the request to the handset 1a and an expiry date 44 for completing the validation stage which is computed from the second time period. The response 40 also comprises a total amount 45 to be paid, a number 46 for identifying the MSISDN of the handset that is requesting the pre-payment, a currency code 47 for indicating the currency of any credit card or debit card transaction, a country code 48 which identifies the origin of the MSISDN of the first handset 1a, a transaction certificate 49 for enabling the request to be validated at the payment stage and a message authentication code 50 which is data generated by encryption routines for ensuring that data comprised in the response is not corrupted or tampered with prior to transmission to a POID 13. The response 40 is sent to the first handset 1a (step S8), where it is stored in the SIM card (step S9).

If the secure host 15 receives a rejection message (not shown) from the billing centre 12, then the response 40 may be replaced with a refusal message (not shown). The refusal message can indicate the reason for refusing the request and, if appropriate, an invitation to retry.

At this point, the first and second pre-pay accounts have not been credited. Before this happens, the request must be validated and a payment made. These steps are performed in a payment stage:

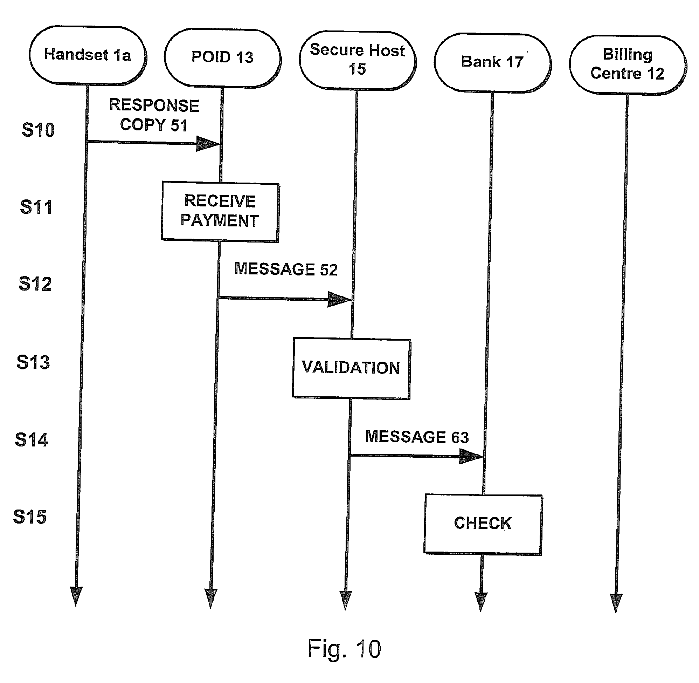

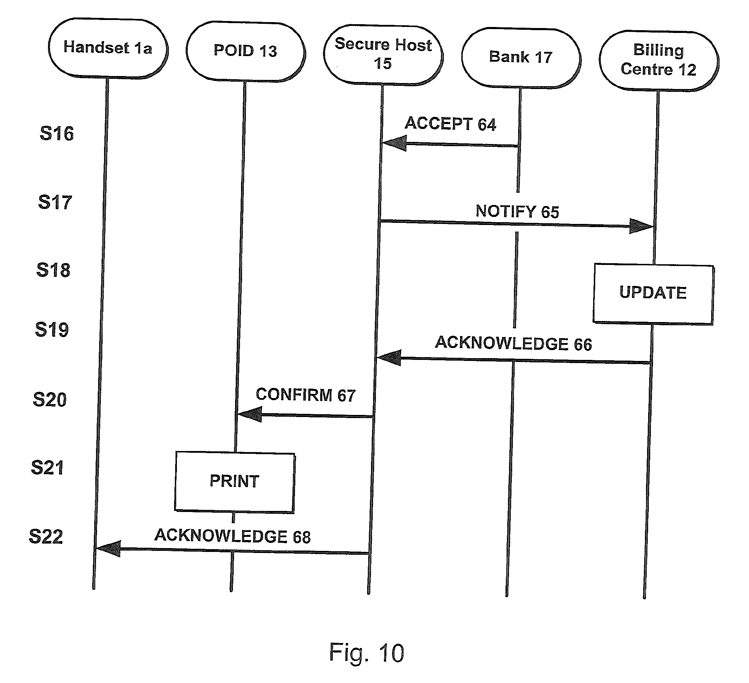

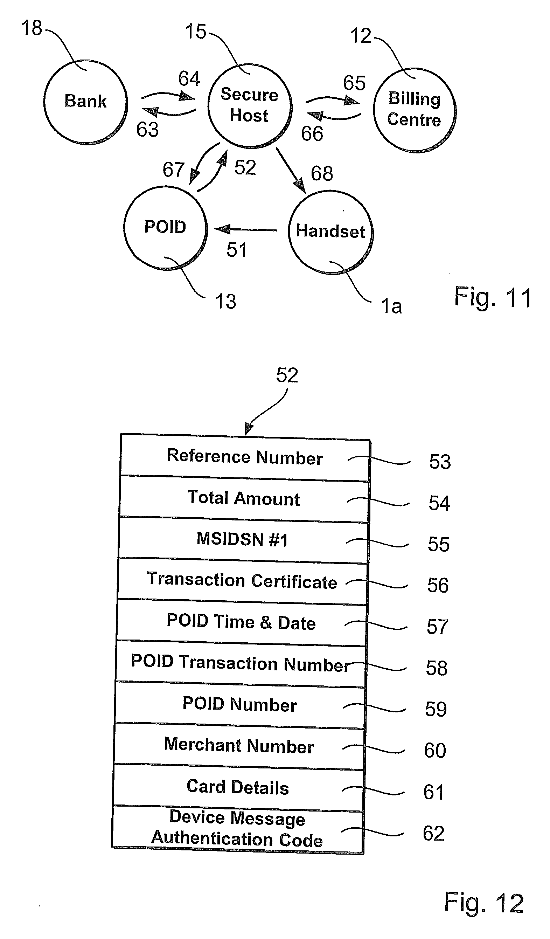

Referring to Figures 10 and 11, the first user walks up to one of the POIDs 13 and transmits a copy 51 of the response 40 over the wireless link by selecting a payment menu and pressing a key to effect transmission of a signal from the handset transceiver 21 to one of the POID transceivers 25 (step S10).

The POID 13 can validate the data received in the copy 51. If the data has been corrupted or tampered with or is invalid for any other reason, then the POID 13 can terminate the process. The POID 13 can then transmit a message to the secure host 15 notifying it of the failure and also display a message indicating to the user that the transaction has failed.

The POID 13, using the display 27, prompts the first user to pay and indicates the total amount, which in this example is "*£*30". The user swipes their credit card through the reader 24 (step S11). Alternatively, the user can pay in cash. If the user is roaming, then the POID 13 may also display the total amount in a local currency. Thus, if the user is British and is roaming in France, then the POID 13 displays "FF 300". This allows the user to make a cash payment using local currency.

Referring to Figure 12, the POID 13 sends a message 52 to the secure host 15 (step S12). The message 52 comprises a reference number 53 which is a copy of the reference number 42 sent to the handset 1a, the total amount 54, a number 55 for identifying the MSISDN of the handset that is requesting the pre-payment, a transaction certificate 56 which is a copy of the transaction certificate 49 sent to the handset 1a, a timestamp 57 at which payment was made, a transaction number 58 for identifying the transaction at the POID 13, a device number 59 for identifying the POID 13, a merchant number 60 for identifying the vendor, encrypted credit card details 61 and a message authentication code 62, again for checking whether the data has been corrupted or tampered with. It will be appreciated that if the user has paid with cash, then no card details 61 are sent.

The secure host 15 then validates the details contained in the message 52 (step S13). This includes comparing the transactions certificate 56 with a copy of the transaction certificate 49 computed from data held in its database 30 and checking that payment has been made before the expiry date. The secure host 15 may also send a message 63 to the bank 18 (step S14). The message 63 includes details relating to the credit card to allow the bank to check card authenticity (step S15). If the card details are authentic, then the bank 18 returns an acceptance message 64 to the secure host 15 (step S16). Of course, if the user has paid with cash, then steps S15 and S16 are not needed.

At this point, the secure host 15 has validated the request 33 and checked the authorisation of the credit card.

The secure host 15 sends a notification 65 to the billing centre 12 indicating the identity of the first and second pre-pay accounts and the amount to be credited to the accounts (step S17). The billing centre 12 updates the first and second pre-pay accounts (step S18) and returns an acknowledgement message 66 (step S19).

The secure host 15 sends a confirmation message 67 to the POID 13 (step S20) which informs the user that the crediting process has been completed (step S21). The POID 13 may print an acknowledgement (not shown) for the user.

The secure host 15 sends a confirmation message 68 to the first handset 12a outlining the transaction (step S22). The secure host 15 may also send details to the second handset 1b.

At this point the first and second accounts have been credited and, if they were depleted before the crediting process began, the handsets 1a, 1b can be used.

If the secure host 15 or the bank 18 find that the message 52 has been corrupted, tampered with or otherwise invalid or that the payment is insufficient, blocked or otherwise irregular, then the transaction is terminated and the secure host 15 issues a rejection message (not shown) to the POID 13 and, optionally, a further rejection message to the handset 1a. The rejection message may invite the user to re-try, for example by re-transmitting the copy 51 and/or using a different credit card. Alternatively, the user may be barred from making further validation attempts at the POID 13. The secure host 15 may set a flag (not shown) indicating that an invalid attempt to validate the request has been made. Thus, it can reject further validation attempts made by the handset 1a made at any POID 13. The secure host 15 can also reject new crediting requests from the handset 1a. The billing centre 12 may also be informed of the invalid attempt to validate the request. Thus, the operators of PLMN 2 may take appropriate steps, such as preventing calls being made from the first handset 1a.

Although the embodiment described above shows a user terminal accessing the secure host 15 through a PLMN to which the billing centre is attached, this need not be the case. For example, the user may be roaming in a visited PLMN (not shown). The user sends a request 33 to the secure host 15 using service provided by the visited PLMN (not shown). The secure host 15 then interrogates the billing centre 12 of the home PLMN, namely PLMN 2. The response 40 is returned though the visited PLMN. The user then validates the request as before by accessing one of the POIDs 13.

This process has several advantages. Firstly, the first user can credit not only the first pre-pay account associated with the first handset 1a, but also the second pre-pay-pay account associated with the second handset 1b. This is convenient where the first user is a parent and the second user is a son or daughter. Furthermore, the user can prepare the request at their leisure. However, because the relevant details have already been entered and are easily transferred over the wireless link, validation is quick and straightforward. Moreover, the user can pre-pay virtually anywhere in the world. The POIDs are not network specific. Thus, the user can send a request when roaming in a visited network and pay at any POID. If the transaction is performed abroad, then the user can pay in local currency using cash or in their home currency using a payment card. In addition, this arrangement does not require further modification of handset hardware, thus allowing existing handsets to be used. Importantly, the arrangement is secure and makes fraudulent transactions more difficult. A handset is required both for making the request and for validation. Thus, it becomes much more difficult to perform a fraudulent transaction using the POID alone.

If the first user is planning to travel abroad, they can carry out the request stage prior to departure. There is no obligation to complete the transaction by performing the payment stage. Therefore, the user can travel with the knowledge that they can credit their account, if necessary, without incurring expensive international call charges.

A process by which credit is deducted from an account, for example the first account, will briefly be described.

Referring once again to Figure 1, the user initiates a call from the first handset 1a. This comprises sending a request to establish a call which is received by one of the MSCs 5. The handset 1a is recognised as being a pre-paid handset. Therefore, the MSC 5 notifies the billing centre 12. The computer 23 retrieves details of the first account from the database 22 and computes available call time remaining in the account. If the account is depleted, then there is zero available call time and the call is terminated. If, however, credit is still available, then the call is allowed to proceed and a timer, measuring elapsed call time, is started. If, during the call, the elapsed call time exceeds the available call time, then the call is terminated. At the end of the call, the call time is measured and the cost of the call is computed. The cost is deducted from the first account.

In the process just described, the handset 1a is located in an area served by the PLMN 2. Those skilled in the art will understand that the process can be modified to allow the user to place a call using the first handset 1a from a visited PLMN (not shown).

It will be appreciated that the handset 1a may be wireless application protocol (WAP)-enabled or SIM-toolkit-enabled for use with a wireless internet gateway (WIG) or support general packet radio services (GPRS). Alternatively, the handset 1a may be a 3g handset for use in universal mobile telecommunication system (UMTS) or wideband code-division multiple access (W-CDMA) networks. Thus, the request 33 and the response 40 can be sent by methods other than short message service (SMS).

The POID and secure host may be connected by various types of physical links including via satellite, by a microwave link or by fibre optic or through a PSTN or a PLMN network, such as a GSM network.

The PLMN and the secure host may be connected using other types of networks.

It will also be appreciated that any type of payment card including debit cards, electronic money cards and chip cards issued by financial institutions may be used instead of a credit card as a means for payment.

From reading the present disclosure, other variations and modifications will be apparent to persons skilled in the art. Such variations and modifications may involve equivalent and other features which are already known in the design, manufacture and use of systems for crediting an account and component parts thereof and which may be used instead of or in addition to features already described herein.

Although claims have been formulated in this application to particular combinations of features, it should be understood that the scope of the disclosure of the present invention also includes any novel features or any novel combination of features disclosed herein either explicitly or implicitly or any generalisation thereof, whether or not it relates to the same invention as presently claimed in any claim and whether or not it mitigates any or all of the same technical problems as does the present invention. The applicant hereby give notice that new claims may be formulated to such features and/or combinations of such features during the prosecution of the present application or of any further application derived therefrom.

## Claims

1. A method operating a mobile communications device (1a) comprising:
transmitting, to a host (15), a request (33) to credit one or more accounts, said request (33) including information identifying said one or more accounts and indicating a respective amount (35a, 35b, 35c) to be credited to each of said one or more accounts;
receiving, from said host (15), a response (40) including a transaction certificate (49) and a message authentication code (50);
storing the response (40); and
transmitting, to a payment device (13), a message (51) comprising information contained in said response (40).

2. A method according to claim 1, wherein said transmitting of said request (33) comprises sending a text message.

3. A method according to claim 1 or 2, wherein said transmitting of said message (51) comprises sending a copy of said response (40).

4. A method according to any preceding claim, wherein said transmitting of said message (51) comprises sending signals over a wireless link (21, 25).

5. A method according to claim 4, wherein said sending signals over said wireless link (21, 25) comprises transmitting said signals using infrared radiation or transmitting said signals using radio and, optionally, transmitting signals using a Bluetooth™ transceiver.

6. A method of operating a host (15) comprising:
receiving, from a mobile communications device (1a), a request (33) to credit one or more accounts, said request (33) including information identifying said one or more accounts and indicating a respective amount (35a, 35b, 35c) to be credited to each of said one or more accounts;
transmitting a response (40) to said mobile communications device, the response including a transaction certificate (49) and a message authentication code (50); and
receiving, from a payment device (13), a message (52) including information contained in said response (40).

7. A method according to claim 6, further comprising forwarding, to a billing centre (12) for managing some or all of said one or more accounts, some or all of said information included in said request (33).

8. A method according to claim 6 or 7, comprising validating said information relating to said response and/or comparing a transaction certificate included in said second message (52) with a transaction certificate computed from data stored at said host.

9. A method of operating a payment device (13) comprising:
receiving, from a mobile communications device (1a), a message (51) comprising information contained in a response (33) to a request by said mobile communications device to credit one or more accounts, the message including a transaction certificate (49) and a message authentication code (50), and
sending a second message (52) to a host (15) including some or all of said information comprised in said message together with information relating to a payment for crediting said one or more accounts.

10. A computer program which, when executed by a processor, causes the processor to perform a method according to any preceding claim.

11. A method of crediting an account, comprising:
a method of operating host according to any one of claims 6 to 8; and
a method of operating a payment device according to claim 9.

12. A method of crediting an account according to claim 11, further comprising:
a method of operating a mobile communications device according to any one of claims 1 to 10.

13. A mobile communications device (1a) comprising:
means (2, 10) for transmitting, to a host (15), a request (33) for crediting one or more accounts, said request including information identifying said one or more accounts and indicating a respective amount (35a, 35b, 35c) to be credited to each of said one or more accounts;
means for receiving (2, 10), from said host, a response including a transaction certificate (49) and a message authentication code (50); and
means (21) for transmitting, to a payment device (13), information contained in said response.

14. A host (15) for managing crediting of accounts comprising:
means (31) for receiving, from a mobile communications device, a request to credit one or more accounts, said request including information identifying said one or more accounts and indicating a respective amount (35a, 35b, 35c) to be credited to each of said one or more accounts;
means (31) for transmitting, to said mobile communications device, a response including an amount (45) to be paid in a payment stage, a transaction certificate (49) and a message authentication code (50); and
means (31) for receiving, from a payment device, a message including information contained in said response.

15. A payment device (13) comprising:
means (25) for receiving from a mobile communications device (1a) a message (51) comprising information contained in a response (40) to a request (33) by said mobile communications device to credit one or more accounts, the message including transaction certificate (49) and a message authentication code (50); and
means for sending a second message (52) to a host (15) including some or all of said information comprised in said message together with information relating to a payment for crediting said one or more accounts.
